# EUROPÄISCHE PATENTSCHRIFT

(11) **EP 3 459 725 B1**
(45) Veröffentlichungstag und Bekanntmachung des Hinweises auf die Patenterteilung: **29.07.2020**
(21) Anmeldenummer: 18192146.1
(22) Anmeldetag: 03.09.2018
(51) Int. Cl.: B31F 1/28, B32B 37/12, B32B 37/20, B32B 38/14

(54) **WELLPAPPEANLAGE**
CORRUGATED BOARD SYSTEM
INSTALLATION À CARTONS ONDULÉS

(30) Priorität: 21.09.2017 DE 102017216718
(43) Veröffentlichungstag der Anmeldung: 27.03.2019
(73) Patentinhaber: BHS Corrugated Maschinen- und Anlagenbau GmbH, 92729 Weiherhammer (DE)
(72) Erfinder: Städele, Norbert, 92711 Parkstein (DE); Kraus, Helmut, 92442 Wackersdorf (DE); Mark, Maximilian, 95643 Tirschenreuth (DE)
(74) Vertreter: Rau, Schneck & Hübner Patentanwälte Rechtsanwälte PartGmbB

(56) Entgegenhaltungen:
- JP-A- 2017 001 266
- US-A- 4 169 007
- US-A1- 2011 247 746
- US-A1- 2013 029 825
- US-A1- 2016 361 886

## Beschreibung

Die Erfindung betrifft eine Wellpappeanlage zum Herstellen von Wellpappe gemäß dem Oberbegriff des Anspruchs 1.

Wellpappeanlagen mit Druckanordnungen sind aus dem Stand der Technik durch offenkundige Vorbenutzung allgemein bekannt. Nachteilig an diesen Wellpappeanlagen ist oftmals, dass deren Druckqualität nicht zufriedenstellend ist. Ferner erfordern solche Wellpappeanlagen einen großen Platzbedarf.

Eine aus der US 2016/0361886 A1 bekannte Wellpappeanlage umfasst eine Vorrichtung zum Herstellen einer einseitig kaschierten Wellpappebahn und einer Kaschierbahn-Abgabevorrichtung sowie eine diesen nachgeordnete Verpressvorrichtung zum Erzeugen einer zweiseitig kaschierten Wellpappebahn. Der Verpressvorrichtung sind eine Inkjet-Druckvorrichtung zum Aufdrucken individueller Identifikationsinformationen in einer Längsschneide-/Rillvorrichtung und eine Querschneidevorrrichtung nachgeordnet. In der Längsschneide-/Rillvorrichtung ist die Bahn in der Querrichtung fixiert. Das Druckergebnis dieser bekannten Inkjet-Druckvorrichtung ist nicht immer zufriedenstellend.

Aus der US 2013/0029825 A1 ist eine Wellpappeanlage mit Inline-Digitaldruckvorrichtungen bekannt. Gemäß einer Ausführungsform werden eine erste Deckbahn und eine Wellbahn sowie eine zweite Deckbahn zusammengeführt. Die Bahnen werden mittels Zusammendrückrollen unter Bildung einer beidseitig kaschierten Wellpappebahn zusammengedrückt. Stromabwärts zu den Zusammendrückrollen sind zwei Druckvorrichtungen angeordnet, die im Stande sind, die äußeren Seiten der beidseitig kaschierten Wellpappebahn zu bedrucken.

Aus der JP 2017-001266 A ist eine Wellpappeanlage bekannt, die eine Vorrichtung zur Herstellung einer einseitig kaschierten Wellpappebahn und eine Vorrichtung zum Herstellen einer zweiseitig kaschierten Wellpappebahn umfasst. Die Wellpappeanlage weist außerdem eine Druckanordnung auf, die der Vorrichtung zum Herstellen einer zweiseitig kaschierten Wellpappebahn und einer Längsschneide-/Rillvorrichtung nachgeordnet ist.

Der Erfindung liegt die Aufgabe zugrunde, eine eine Druckanordnung umfassende Wellpappeanlage bereitzustellen, deren Druckqualität besonders hoch ist. Insbesondere soll diese Wellpappeanlage einen vergleichsweise kleinen Platzbedarf haben.

Diese Aufgabe wird erfindungsgemäß durch die in dem Anspruch 1 angegebenen Merkmale gelöst.

Der Kern bei der erfindungsgemäßen Wellpappeanlage liegt darin, dass die quasi fertig ausgebildete zweiseitig/beidseitig kaschierte, insbesondere geförderte, bevorzugt endlose, Wellpappebahn bedruckt wird. Dies ist unter anderem aus Schwingungsgründen vorteilhaft. Die zweiseitig kaschierte Wellpappebahn ist mindestens dreilagig, wie dreilagig, fünflagig oder siebenlagig. Sie hat außenseitig zwei einander gegenüberliegende ungewellte bzw. glatte Bahnen.

Die Zuganordnung sorgt für eine besonders gute Handhabung der zweiseitig kaschierten Wellpappebahn in der Druckanordnung bzw. benachbart zu der mindestens einen Digitaldruckvorrichtung, was sich positiv auf die Druckqualität auswirkt. Insbesondere ist die zweiseitig kaschierte Wellpappebahn in der Druckanordnung bzw. benachbart zu der mindestens einen Digitaldruckvorrichtung so besonders gut unter Zugspannung setzbar. Die Zugspannung ist vorzugsweise einstellbar.

Es hat sich überraschend herausgestellt, dass die Bedruckung der zweiseitig kaschierten Wellpappebahn zu wesentlich besseren Druckergebnissen als die Bedruckung einzelner Wellpappebögen führt. Dies ist vor allem darauf zurückzuführen, dass die geförderte zweiseitig kaschierte Wellpappebahn besser als geförderte Wellpappebögen spannbar bzw. unter Spannung setzbar ist. Bei endloser Ausbildung der zweiseitig kaschierten Wellpappebahn sind Störungen in der Druckanordnung besonders wirksam verhinderbar. Eine derartige Wellpappebahn hat naturgemäß keine vorauseilenden bzw. nacheilenden Stoßkanten, die beispielsweise in der Druckanordnung anstoßen und so zu einer Beschädigung der Druckanordnung bzw. zu einem Stau führen könnten.

Die zweiseitig kaschierte Wellpappebahn wird günstigerweise in der Druckanordnung auf mindestens einer ihrer Außenseiten bedruckt, die dann eine Druckseite bildet. Insbesondere wird durch die mindestens eine Digitaldruckvorrichtung die Deckbahn, günstigerweise von oben, bedruckt, die in der zweiseitig kaschierten Wellpappebahn gegenüberliegend zu einer Kaschierbahn angeordnet ist. Es ist von Vorteil, wenn bereits eine bedruckte Kaschierbahn eingesetzt bzw. die Kaschierbahn in der Wellpappeanlage bedruckt wird. Günstigerweise erwärmt die Druckanordnung bzw. die mindestens eine Digitaldruckvorrichtung die zweiseitig kaschierte Wellpappebahn beim Bedrucken bzw. bei einer Bedruckungstrocknung zumindest bereichsweise auf maximal 120 °C, bevorzugter auf 50 °C bis 70 °C. Sie hat vorzugsweise mindestens ein eigenes Heizelement.

Die mindestens eine Digitaldruckvorrichtung ist insbesondere eine Inkjet-druckvorrichtung. Andere bekannte Druckvorrichtungen bzw. -verfahren sind alternativ einsetzbar.

Die mindestens eine Digitaldruckvorrichtung ist insbesondere imstande, mindestens einen Buchstaben, eine Ziffer, ein anderes Zeichen, eine Grafik und/oder ein Foto auf die zweiseitig kaschierte Wellpappebahn aufzudrucken. Dafür wird günstigerweise Farbe bzw. Tinte herangezogen.

Es ist zweckmäßig, wenn die mindestens eine Digitaldruckvorrichtung mindestens einen Druckkopf hat. Günstigerweise hat die mindestens eine Digitaldruckvorrichtung mehrere Druckköpfe, die in einer Breiten- bzw. Querrichtung der zweiseitig kaschierten Wellpappebahn kaskadiert angeordnet sind. Es ist von Vorteil, wenn die mindestens eine Digitaldruckvorrichtung mehrere in einer Förderrichtung der Wellpappeanlage hintereinander angeordnete Reihen an Druckköpfen, günstigerweise für unterschiedliche Farben, aufweist.

Es ist von Vorteil, wenn der mindestens einen Digitaldruckvorrichtung eine Trocknungsvorrichtung zum Trocknen eines erzeugten Aufdrucks bzw. der zweiseitig kaschierten Wellpappebahn nachgeordnet ist. Günstigerweise ist dieser eine Vorbeschichtungsanordnung vorgeordnet.

Günstigerweise ist die Druckanordnung nachrüstbar.

Die mindestens eine Vorrichtung zum Herstellen einer jeweiligen einseitig kaschierten Wellpappebahn umfasst günstigerweise eine jeweilige Riffeleinrichtung zum Riffeln der zu wellenden Materialbahn unter Bildung einer Wellbahn.

Es ist von Vorteil, wenn die mindestens eine Vorrichtung zum Herstellen einer jeweiligen einseitig kaschierten Wellpappebahn eine jeweilige Leimauftragseinrichtung zum Beleimen der Wellbahn aufweist.

Es ist zweckmäßig, wenn die mindestens eine Vorrichtung zum Herstellen einer jeweiligen einseitig kaschierten Wellpappebahn außerdem eine jeweilige Anpresseinrichtung zum Anpressen der Deckbahn gegen die mit Leim versehene Wellbahn umfasst.

Vorzugsweise sind der Vorrichtung zum Herstellen einer jeweiligen einseitig kaschierten Wellpappebahn eine jeweilige Deckbahn-Abgabevorrichtung und Materialbahn-Abgabevorrichtung vorgeordnet. Die Deckbahn-Abgabevorrichtung und/oder die Materialbahn-Abgabevorrichtung ist/sind günstigerweise als Splicevorrichtung ausgebildet.

Es ist von Vorteil, wenn die Kaschierbahn-Abgabevorrichtung eine Splicevorrichtung zum Abgeben einer endlosen, insbesondere bedruckten, Kaschierbahn ist.

Die Vorrichtung zum Herstellen einer zweiseitig kaschierten Wellpappebahn hat mindestens eine Verpressstrecke bzw. mindestens einen Verpressspalt. Die mindestens eine Verpressstrecke bzw. der mindestens eine Verpressspalt ist günstigerweise durch mindestens zwei paarweise angeordnete, insbesondere antreibbare, Verpresswalzen bzw. Verpressgurte gebildet bzw. begrenzt. Die Verpressgurte sind vorzugsweise endlos.

Durch den mindestens einen Verpressspalt bzw. die mindestens eine Verpressstrecke ist die zweiseitig kaschierte Wellpappebahn geführt, wobei deren Bahnen zur leimenden Verbindung miteinander aneinander gepresst werden.

Die Querschneidevorrichtung hat günstigerweise zwei drehantreibbare, übereinander angeordnete Querschneidewalzen mit radial nach außen erstreckenden Querschneidemessern.

Die hier verwendeten Ausdrücke "vorgeordnet", "nachgeordnet", "stromaufwärts", "stromabwärts", "hintereinander" oder dergleichen beziehen sich insbesondere auf die Förderrichtung der jeweiligen geförderten Bahn.

Verarbeitungstemperaturen von Leim von unter 70 °C führen dazu, dass besonders wenig Energie zur Herstellung der Wellpappe benötigt wird. Ferner werden die zu beleimenden bzw. miteinander zu verbindenen Bahnen geschont. Der Leim hat eine vergleichsweise niedrige Abbindetemperatur bzw. Aushärtetemperatur.

Insbesondere erfolgt eine Abbindung beziehungsweise Aushärtung des Leims beim Auftragen desselben auf die mindestens eine einseitig kaschierte Wellpappebahn bzw. unmittelbar danach, deren Leim-Aufnahmegebiet vorzugsweise eine Temperatur aufweist, die zur Abbindung, Aushärtung bzw. Trocknung des Leims ausreichend ist. Bereiche des Leims bzw. von Leimlinien erfahren dabei günstigerweise sowohl bei dem Leimauftrag als auch danach Temperaturen von unter 70 °C.

Das Leimwerk kann auch Gegenstand eines eigenständigen Erfindungsgegenstands sein.

Weitere vorteilhafte Ausgestaltungen der Erfindung sind in den Unteransprüchen angegeben.

Günstigerweise sind die erste und zweite Zugvorrichtung gemäß den Unteransprüchen 2, 3 unabhängig voneinander einstellbar bzw. betätigbar. Die zweiseitig kaschierte Wellpappebahn ist so günstigerweise in der Druckanordnung bzw. benachbart zu der mindestens einen Digitaldruckvorrichtung ausreichend gespannt und somit glatt. Es ist zweckmäßig, wenn die Druckanordnung bzw. die mindestens eine Digitaldruckvorrichtung zwischen der ersten Zugvorrichtung und der zweiten Zugvorrichtung angeordnet ist.

Das mindestens eine Zugelement gemäß dem Unteranspruch 4 ist günstigerweise drehantreibbar. Es ist beispielsweise als Rolle, Gurt oder dergleichen ausgeführt.

Das mindestens eine Gegenelement ist bevorzugt drehantreibbar. Es ist von Vorteil, wenn das mindestens eine Gegenelement als Rolle, Gurt oder dergleichen ausgebildet ist. Alternativ ist das mindestens eine Gegenelement beispielsweise statisch. Es ist dann beispielsweise als Tisch ausgeführt.

Es ist von Vorteil, wenn die zweiseitig kaschierte Wellpappebahn in dem mindestens einen Zugspalt eine Pressung erfährt. Insbesondere wird die zweiseitig kaschierte Wellpappebahn dort in ihrer Dickenrichtung zusammengepresst. So ist die Bahnspannung der zweiseitig kaschierten Wellpappebahn besonders funktionssicher beeinflussbar.

Die Längsschneide-/Rillvorrichtung gemäß dem Unteranspruch 5 umfasst bevorzugt mindestens eine Längsschneideeinheit und mindestens eine Rilleinheit.

Es ist zweckmäßig, wenn die Kurz-Querschneidevorrichtung gemäß dem Unteranspruch 6 bzw. 7 einen Messerzylinder und einen diesem zugeordneten Gegenzylinder aufweist. Günstigerweise ist die Kurz-Querschneidevorrichtung imstande, einen Schnitt zu erzeugen, der sich über die volle Breite der zweiseitig kaschierten Wellpappebahn erstreckt. Dazu werden bevorzugt der Messerzylinder und Gegenzylinder derart in Rotation versetzt, dass sie beim Schneidvorgang miteinander wechselwirken. Ferner ist vorzugsweise die Kurz-Querschneidevorrichtung imstande, einen Schnitt mit einer bestimmten Länge und einem bestimmten Abstand von einem Rand der zweiseitig kaschierten Wellpappebahn zu erzeugen. Dazu werden Gegenkörper-Elemente entsprechend gewählt bzw. verstellt. Für den Schneidvorgang werden der Messerzylinder und der Gegenzylinder derart in Rotation versetzt, dass ein Messer des Messerzylinders mit den Gegenkörper-Elementen wechselwirkt.

Die Ausgestaltung gemäß dem Unteranspruch 7 erlaubt eine Ausschleusung fehlerhafter Wellpappe(bahnen) vor der Bedruckung, was die Druckanordnung schützt.

Die Bedruckungs-Synchronisationsanordnung gemäß dem Unteranspruch 8 sorgt für eine besonders hohe Wellpappequalität. Insbesondere sind so die Bedruckung und die zweiseitig kaschierte Wellpappebahn, insbesondere maschinell bzw. automatisch, aneinander anpassbar bzw. angleichbar. Insbesondere ist die Bedruckung durch die mindestens eine Digitaldruckvorrichtung an eine bereits vorhandene Bedruckung auf der Kaschierbahn besonders einfach und funktionssicher anpassbar bzw. angleichbar. Eine passgenau beidseitig bedruckte zweiseitig kaschierte Wellpappebahn ist so sicher erhältlich.

Es ist von Vorteil, wenn die Synchronisationsinformationen beziehungsweise Positionsinformationen auf der zweiseitig kaschierten Wellpappebahn in der Wellpappeanlage außen auf eine Außenbahn der späteren zweiseitig kaschierten Wellpappebahn aufgedruckt werden. Alternativ wurden die Synchronisationsinformationen beziehungsweise Positionsinformationen bereits außerhalb der Wellpappeanlage auf eine solche Bahn aufgebracht. Es ist von Vorteil, wenn sich die Synchronisationsinformationen beziehungsweise Positionsinformationen auf der Kaschierbahn befinden.

Günstigerweise handelt es sich bei den Synchronisationsinformationen beziehungsweise Positionsinformationen um Marken, wie Druckmarken, Schneidmarken und/oder Keilmarken, und/oder um Codes, wie eindimensionale und/oder zweidimensionale Codes.

Die mindestens eine Leseanordnung zum Lesen der Synchronisationsinformationen beziehungsweise Positionsinformationen umfasst vorzugsweise mindestens einen optischen Lesekopf und/oder mindestens eine Kamera, wie Smartkamera und/oder Zeilenkamera.

Die mindestens eine Leseanordnung erfasst insbesondere Synchronisationsinformationen beziehungsweise Positionsinformationen für Positionierungen der Bedruckung in und/oder entgegen der Förderrichtung der zweiseitig kaschierten Wellpappebahn. Günstigerweise erfasst die mindestens eine Leseanordnung Synchronisationsinformationen beziehungsweise Positionsinformationen auch für Positionierungen der Bedruckung senkrecht zu der Förderrichtung der zweiseitig kaschierten Wellpappebahn.

Es ist von Vorteil, wenn die mindestens eine Leseanordnung stromaufwärts zu der mindestens einen Digitaldruckvorrichtung angeordnet ist. Günstigerweise ist die mindestens eine Leseanordnung stromabwärts zu der mindestens einen Verpressstrecke angeordnet. Sie ist vorzugsweise stromaufwärts zu der Längsschneide-/Rillvorrichtung angeordnet. So ist eine hohe Präzision der Deckbahn und Kaschierbahn zueinander möglich.

Auch die Ausgestaltung gemäß dem Unteranspruch 9 ergibt eine besonders hohe Wellpappequalität. Die Bahngeschwindigkeits-Messvorrichtung arbeitet günstigerweise berührungslos, bevorzugt optisch, vorzugsweise mittels Laser. Die Signalverbindung zwischen der Bahngeschwindigkeits-Messvorrichtung und der Betätigungseinheit kann drahtlos oder drahtgebunden sein. Die Betätigungseinheit ist vorzugsweise elektronischer Art. Es ist von Vorteil, wenn die Betätigungseinheit als Steuer- und/oder Regeleinheit ausgeführt ist. Die Bahngeschwindigkeits-Messvorrichtung ist beispielsweise Bestandteil der Bedruckungs-Synchronisationsanordnung.

Günstigerweise ist ein Abstand zwischen der Bahngeschwindigkeits-Messvorrichtung und der mindestens einen Digitaldruckvorrichtung bekannt und kleiner als 1 m. Es ist zweckmäßig, wenn eine Wegverfolgung der Marken über die Bahngeschwindigkeits-Messvorrichtung und Kenntnis einer Strecke zwischen der Leseanordnung und der mindestens einen Digitaldruckvorrichtung erfolgt.

Gemäß dem Unteranspruch 10 hat die Druckanordnung günstigerweise eine eigene Vakuum-Führungsvorrichtung, die die zweiseitig kaschierte, geförderte Wellpappebahn mittels Vakuum bzw. Unterdruck an mindestens einer Führungsfläche hält. Die Vakuum-Führungsvorrichtung erstreckt sich vorzugsweise zumindest benachbart zu der mindestens einen Digitaldruckvorrichtung. Durch die geführte zweiseitig kaschierte Wellpappebahn ist eine besonders hohe Druckqualität erzielbar. Insbesondere ist so ein vorbestimmter Verlauf der zweiseitig kaschierten Wellpappebahn in der Druckanordnung gewährleistet.

Die mindestens eine Heizeinrichtung gemäß dem Unteranspruch 11 führt ebenfalls zu einer besonders hohen Druckqualität. Es ist von Vorteil, wenn die mindestens eine Heizeinrichtung mindestens in einem stromaufwärtigen Bereich der Vakuum-Führungsvorrichtung angeordnet ist. Sie ist vorzugsweise stromabwärts zu der mindestens einen Digitaldruckvorrichtung angeordnet. Sie hat vorzugsweise mindestens ein mittels Dampf beheizbares metallisches Heizelement.

Der mindestens eine Führungstisch gemäß dem Unteranspruch 12 hat günstigerweise eine feste, fixe Führungsfläche zum, insbesondere exakten, Führen bzw. Tragen der zweiseitig kaschierten Wellpappebahn. Alternativ oder zusätzlich ist mindestens ein Vakuumband zur Führung der zweiseitig kaschierten Wellpappebahn vorhanden.

Die angesaugte zweiseitig kaschierte Wellpappebahn gemäß dem Unteranspruch 13 ist besonders sicher bzw. dicht während ihrer Förderung an dem mindestens einen Führungstisch geführt, was zu einer besonders hohen Druckqualität führt.

Auch die Ausgestaltung gemäß dem Unteranspruch 14 ergibt eine besonders hohe Druckqualität. Die zweiseitig kaschierte Wellpappebahn ist bei der Bedruckung besonders sicher bzw. dicht an dem mindestens einen Führungstisch geführt. Der mindestens eine Führungstisch ist günstigerweise in Bezug auf die Förderrichtung der zweiseitig kaschierten Wellpappebahn in der Druckanordnung konkav und/oder konvex gekrümmt.

Die Ausgestaltung gemäß dem Unteranspruch 15 ist besonders benutzerfreundlich. Beispielsweise ist die mindestens eine Digitaldruckvorrichtung bei einem Einfädelvorgang der zweiseitig kaschierten Wellpappebahn in ihre Parkstellung verlagerbar. Auch Wartungs- bzw. Störungsbehebungsarbeiten sind so äußerst gut durchführbar, wenn sich die mindestens eine Digitaldruckvorrichtung in ihrer Parkstellung befindet. Bei einem Druckvorgang befindet sich die mindestens eine Digitaldruckvorrichtung in ihrer Druckstellung, insbesondere benachbart zu der zweiseitig kaschierten Wellpappebahn. Es ist von Vorteil, wenn die mindestens eine Digitaldruckvorrichtung dazu verschwenkbar und/oder verschiebbar gelagert ist.

Die Ausgestaltung gemäß dem Unteranspruch 16 führt zu einer Wellpappeanlage, die einen vergleichsweise geringen Platzbedarf hat. Die Vorbeschichtungsanordnung umfasst eine Vorbeschichtungs-Auftragsvorrichtung und vorzugsweise auch eine Trocknungsvorrichtung und/oder Kühlvorrichtung. Es ist von Vorteil, wenn die Vorrichtung zum Herstellen einer zweiseitig kaschierten Wellpappebahn eine integrierte Zugvorrichtung zum Beeinflussen einer Bahnspannung der zweiseitig kaschierten Wellpappebahn in der Druckanordnung umfasst. Die Zugvorrichtung ist dann beispielsweise durch den mindestens einen Verpressgurt der Vorrichtung zum Herstellen einer zweiseitig kaschierten Wellpappebahn gebildet.

Günstigerweise trennt die Randbeschnittvorrichtung gemäß dem Unteranspruch 17 unverklebte Längsrandbereiche der zweiseitig kaschierten Wellpappebahn ab. Es ist so sicher verhinderbar, dass unverklebte (Rand)bereiche der zweiseitig kaschierten Wellpappebahn zu der mindestens einen Digitaldruckvorrichtung gelangen und so imstande sind, diese zu beschädigen.

Es ist von Vorteil, wenn eine Verstellung der mindestens einen Längsschneideeinheit und/oder Rilleinheit quer zu einer Förderrichtung der zweiseitig kaschierten Wellpappebahn in Abhängigkeit von mindestens einem Randbeschnitt durch die Randbeschnittvorrichtung beziehungsweise von mindestens einer Randbeschnittposition erfolgt.

Eine Positionserfassung des mindestens einen Randbeschnitts erfolgt beispielsweise über eine Druckbilderfassung beziehungsweise Druckbildüberwachung.

Die Druckbilderfassungsanordnung gemäß dem Unteranspruch 19 erfasst die durch die Druckanordnung auf die zweiseitig kaschierte Wellpappebahn aufgedruckten Druckbereiche bzw. Druckbilder. Sie steuert die Längsschneide-/Rillvorrichtung entsprechend an, was zu einem besonders exakten Längsschneiden bzw. Rillen der zweiseitig kaschierten Wellpappebahn neben den Druckbereichen bzw. Druckbildern führt. Nachfolgend werden unter Bezugnahme auf die beigefügte Zeichnung bevorzugte Ausführungsformen der Erfindung beispielhaft beschrieben. Dabei zeigen:
- Fig. 1: eine schematische Seitenansicht einer erfindungsgemäßen Wellpappeanlage,
- Fig. 2: einen Ausschnitt aus Fig. 1, der eine Druckanordnung der Wellpappeanlage und benachbarte Komponenten der Wellpappeanlage veranschaulicht,
- Fig. 3: eine schematische Seitenansicht einer erfindungsgemäßen Wellpappeanlage gemäß einer zweiten Ausführungsform,
- Fig. 4: einen Ausschnitt aus Fig. 3, der die alternative Druckanordnung der Wellpappeanlage und benachbarte Komponenten der Wellpappeanlage zeigt,
- Fig. 5: eine schematische Seitenansicht einer erfindungsgemäßen Wellpappeanlage gemäß einer dritten Ausführungsform,
- Fig. 6: einen Ausschnitt aus Fig. 5, der die alternative Druckanordnung der Wellpappeanlage und benachbarte Komponenten der Wellpappeanlage zeigt,
- Fig. 7: einen Ausschnitt aus Fig. 5, der eine vorgeordnete Beschichtung der zu bedruckenden Deckbahn der zweiseitig kaschierten Wellpappebahn veranschaulicht, und
- Fig. 8: eine schematische Seitenansicht einer erfindungsgemäßen Wellpappeanlage gemäß einer vierten Ausführungsform.

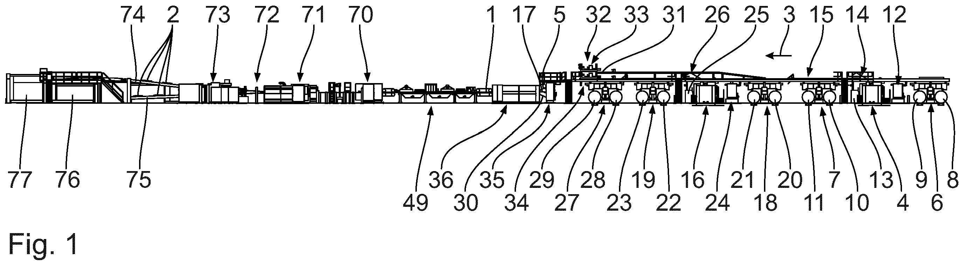

Eine in Figur 1 in ihrer Gesamtheit gezeigte Wellpappeanlage ist imstande, eine endlose fünflagige Wellpappebahn 1 bzw. fünflagige Wellpappebögen 2 herzustellen. Die Wellpappeanlage ist insgesamt länglich ausgeführt. Sie erstreckt sich im Wesentlichen gerade einer Längsrichtung bzw. Förderrichtung 3.

Die Wellpappeanlage umfasst eine erste Vorrichtung 4 zum Herstellen einer einseitig kaschierten ersten Wellpappebahn 5.

Der ersten Vorrichtung 4 zum Herstellen einer einseitig kaschierten ersten Wellpappebahn 5 sind eine erste Deckbahn-Splicevorrichtung 6 und eine erste Materialbahn-Splicevorrichtung 7 vorgeordnet.

Die erste Deckbahn-Splicevorrichtung 6 umfasst zum Abrollen einer endlichen ersten Deckbahn von einer ersten Deckbahnrolle 8 eine erste Abrolleinheit und zum Abrollen einer endlichen zweiten Deckbahn von einer zweiten Deckbahnrolle 9 eine zweite Abrolleinheit. Die endliche erste Deckbahn und die endliche zweite Deckbahn werden zum Bereitstellen einer endlosen ersten Deckbahn in der ersten Deckbahn-Splicevorrichtung 6 miteinander verbunden.

Die erste Materialbahn-Splicevorrichtung 7 ist entsprechend der ersten Deckbahn-Splicevorrichtung 6 ausgebildet. Diese umfasst zum Abrollen einer endlichen ersten Materialbahn von einer ersten Materialbahnrolle 10 eine dritte Abrolleinheit und zum Abrollen einer endlichen zweiten Materialbahn von einer zweiten Materialbahnrolle 11 eine vierte Abrolleinheit. Die endliche erste Materialbahn und die endliche zweite Materialbahn werden zum Bereitstellen einer endlosen ersten Materialbahn in der ersten Materialbahn-Splicevorrichtung 7 miteinander verbunden.

Die endlose erste Deckbahn wird über eine erste Heizanordnung 12 der ersten Vorrichtung 4 zum Herstellen einer einseitig kaschierten ersten Wellpappebahn 5 zugeführt, während die endlose erste Materialbahn über eine erste Umlenkanordnung der ersten Vorrichtung 4 zum Herstellen einer einseitig kaschierten ersten Wellpappebahn 5 zugeführt wird.

Die erste Vorrichtung 4 zum Herstellen einer einseitig kaschierten ersten Wellpappebahn 5 umfasst zum Erzeugen einer eine Wellung aufweisenden endlosen ersten Wellbahn aus der endlosen ersten Materialbahn eine drehbar gelagerte erste Riffelwalze und eine drehbar gelagerte zweite Riffelwalze. Die Riffelwalzen bilden zum Durchführen und Riffeln der endlosen ersten Materialbahn einen ersten Walzenspalt aus. Sie bilden zusammen eine erste Riffelanordnung.

Zum Verbinden der endlosen ersten Wellbahn mit der endlosen ersten Deckbahn zu der einseitig kaschierten ersten Wellpappebahn 5 weist die erste Vorrichtung 4 zum Herstellen einer einseitig kaschierten ersten Wellpappebahn 5 eine erste Leimauftragseinrichtung auf, die eine erste Leimdosierwalze, einen ersten Leimbehälter und eine erste Leimauftragswalze umfasst. Zum Durchführen und Beleimen der endlosen ersten Wellbahn bildet die erste Leimauftragswalze mit der ersten Riffelwalze einen ersten Spalt aus. Der sich in dem ersten Leimbehälter befindende Leim wird über die erste Leimauftragswalze auf Spitzen der Wellung der endlosen ersten Wellbahn aufgetragen. Die erste Leimdosierwalze liegt gegen die erste Leimauftragswalze an und dient zum Ausbilden einer gleichmäßigen Leimschicht auf der ersten Leimauftragswalze.

Die endlose erste Deckbahn wird anschließend mit der mit Leim aus dem ersten Leimbehälter versehenen endlosen ersten Wellbahn in der ersten Vorrichtung 4 zum Herstellen einer einseitig kaschierten ersten Wellpappebahn 5 zusammengefügt.

Zum Anpressen der endlosen ersten Deckbahn gegen die mit Leim versehene, endlose erste Wellbahn, die wiederum bereichsweise an der ersten Riffelwalze anliegt, hat die erste Vorrichtung 4 zum Herstellen einer einseitig kaschierten ersten Wellpappebahn 5 ein erstes Anpressmodul. Das erste Anpressmodul ist günstigerweise als Anpressbandmodul ausgeführt. Es ist oberhalb der ersten Riffelwalze angeordnet. Das erste Anpressmodul hat zwei erste Umlenkwalzen sowie ein endloses erstes Anpressband, das um die beiden ersten Umlenkwalzen geführt ist.

Die erste Riffelwalze greift in einen zwischen den beiden ersten Umlenkwalzen vorliegenden Raum bereichsweise von unten ein, wodurch das erste Anpressband durch die erste Riffelwalze umgelenkt wird. Das erste Anpressband drückt gegen die endlose erste Deckbahn, die wiederum gegen die mit Leim versehene, an der ersten Riffelwalze anliegende endlose erste Wellbahn gepresst wird.

Zum weiteren Fördern der einseitig kaschierten ersten Wellpappebahn 5 wird diese über eine erste Hochtransporteinrichtung 14 einer Brücke 15 der Wellpappeanlage zugeführt. Die Brücke 15 kann auch zum Zwischenspeichern und Puffern der einseitig kaschierten ersten Wellpappebahn 5 dienen.

Die Wellpappeanlage umfasst außerdem eine zweite Vorrichtung 16 zum Herstellen einer einseitig kaschierten zweiten Wellpappebahn 17.

Der zweiten Vorrichtung 16 zum Herstellen einer einseitig kaschierten zweiten Wellpappebahn 17 sind eine zweite Deckbahn-Splicevorrichtung 18 und eine zweite Materialbahn-Splicevorrichtung 19 vorgeordnet.

Die zweite Deckbahn-Splicevorrichtung 18 ist wie die erste Deckbahn-Splicevorrichtung 6 ausgebildet. Diese umfasst zum Abrollen einer endlichen dritten Deckbahn von einer dritten Deckbahnrolle 20 eine fünfte Abrolleinheit und zum Abrollen einer endlichen vierten Deckbahn von einer vierten Deckbahnrolle 21 eine sechste Abrolleinheit. Die endliche dritte Deckbahn und vierte Deckbahn werden zum Bereitstellen einer endlosen zweiten Deckbahn in der zweiten Deckbahn-Splicevorrichtung 18 miteinander verbunden.

Die zweite Materialbahn-Splicevorrichtung 19 ist wie die erste Materialbahn-Splicevorrichtung 7 ausgebildet. Diese umfasst zum Abrollen einer endlichen dritten Materialbahn von einer dritten Materialbahnrolle 22 eine siebte Abrolleinheit und zum Abrollen einer endlichen vierten Materialbahn von einer vierten Materialbahnrolle 23 eine achte Abrolleinheit. Die endliche dritte Materialbahn und vierte Materialbahn werden zum Bereitstellen einer endlosen zweiten Materialbahn in der zweiten Materialbahn-Splicevorrichtung 19 miteinander verbunden.

Die endlose zweite Deckbahn wird über eine zweite Heizanordnung 24 der zweiten Vorrichtung 16 zum Herstellen einer einseitig kaschierten zweiten Wellpappebahn 17 zugeführt, während die endlose zweite Materialbahn über eine zweite Umlenkanordnung 25 der zweiten Vorrichtung 16 zum Herstellen einer einseitig kaschierten zweiten Wellpappebahn 17 zugeführt wird.

Die zweite Vorrichtung 16 zum Herstellen einer einseitig kaschierten zweiten Wellpappebahn 17 ist entsprechend der ersten Vorrichtung 4 zum Herstellen einer einseitig kaschierten ersten Wellpappebahn 5 ausgebildet. Diese umfasst zum Erzeugen einer eine Wellung aufweisenden endlosen zweiten Wellbahn aus der endlosen zweiten Materialbahn eine drehbar gelagerte dritte Riffelwalze und eine drehbar gelagerte vierte Riffelwalze. Die Riffelwalzen bilden zum Durchführen und Riffeln der endlosen zweiten Materialbahn einen zweiten Walzenspalt aus. Sie bilden zusammen eine zweite Riffelanordnung.

Zum Verbinden der endlosen zweiten Wellbahn mit der endlosen zweiten Deckbahn zu der einseitig kaschierten zweiten Wellpappebahn 17 weist die zweite Vorrichtung 16 zum Herstellen einer einseitig kaschierten zweiten Wellpappebahn 17 eine zweite Leimauftragseinrichtung auf, die eine zweite Leimdosierwalze, einen zweiten Leimbehälter und eine zweite Leimauftragswalze umfasst. Zum Durchführen und Beleimen der endlosen zweiten Wellbahn bildet die zweite Leimauftragswalze mit der dritten Riffelwalze einen zweiten Spalt aus. Der sich in dem zweiten Leimbehälter befindende Leim wird über die zweite Leimauftragswalze auf Spitzen der Wellung der endlosen zweiten Wellbahn aufgetragen. Die zweite Leimdosierwalze liegt gegen die zweite Leimauftragswalze an und dient zum Ausbilden einer gleichmäßigen Leimschicht auf der zweiten Leimauftragswalze.

Die endlose zweite Deckbahn wird anschließend mit der mit Leim aus dem zweiten Leimbehälter versehenen endlosen zweiten Wellbahn in der zweiten Vorrichtung 16 zum Herstellen einer einseitig kaschierten zweiten Wellpappebahn 17 zusammengefügt.

Zum Anpressen der endlosen zweiten Deckbahn gegen die mit Leim versehene, endlose zweite Wellbahn, die wiederum bereichsweise an der dritten Riffelwalze anliegt, hat die zweite Vorrichtung 16 zum Herstellen einer einseitig kaschierten zweiten Wellpappebahn 17 ein zweites Anpressmodul. Das zweite Anpressmodul ist günstigerweise als Anpressbandmodul ausgeführt. Es ist oberhalb der dritten Riffelwalze angeordnet. Das zweite Anpressmodul hat zwei zweite Umlenkwalzen sowie ein endloses zweites Anpressband, das um die beiden zweiten Umlenkwalzen geführt ist.

Die dritte Riffelwalze greift in einen zwischen den beiden zweiten Umlenkwalzen vorliegenden Raum bereichsweise unten ein, wodurch das zweite Anpressband durch die dritte Riffelwalze umgelenkt wird. Das zweite Anpressband drückt gegen die endlose zweite Deckbahn, die wiederum gegen die mit Leim versehene, an der dritten Riffelwalze anliegende endlose zweite Wellbahn gepresst wird.

Zum weiteren Fördern der einseitig kaschierten zweiten Wellpappebahn 17 wird diese über eine zweite Hochtransporteinrichtung 26 der Brücke 15 zugeführt. Die Brücke 15 kann auch zum Zwischenspeichern und Puffern der einseitig kaschierten zweiten Wellpappebahn 17 dienen.

Ferner hat die Wellpappeanlage eine Kaschierbahn-Splicevorrichtung 27, die wie die übrigen Splicevorrichtungen 6, 7, 18 bzw. 19 ausgebildet ist. Die Kaschierbahn-Splicevorrichtung 27 umfasst zum Abrollen einer endlichen ersten Kaschierbahn von einer ersten Kaschierbahnrolle 28 eine neunte Abrolleinheit und zum Abrollen einer endlichen zweiten Kaschierbahn von einer zweiten Kaschierbahnrolle 29 eine zehnte Abrolleinheit. Die endliche erste Kaschierbahn und endliche zweite Kaschierbahn werden zum Bereitstellen einer endlosen Kaschierbahn 30 in der Kaschierbahn-Splicevorrichtung 27 miteinander verbunden. Die endlose Kaschierbahn 30 ist einlagig und bereits bedruckt.

In einem stromabwärtigen Endbereich 31 der Brücke 15 ist eine Bahnlauf-Korrekturanordnung 32 angeordnet. Die Bahnlauf-Korrekturanordnung 32 ist oberhalb der Kaschierbahn-Splicevorrichtung 27 angeordnet. Sie umfasst eine der einseitig kaschierten ersten Wellpappebahn 5 zugeordnete erste Bahnlauf-Korrekturvorrichtung 33 und eine der einseitig kaschierten zweiten Wellpappebahn 17 zugeordnete zweite Bahnlauf-Korrekturvorrichtung 34. Die erste Bahnlauf-Korrekturvorrichtung 33 ist imstande, einen Bahnlauf der einseitig kaschierten ersten Wellpappebahn 5 zu beeinflussen bzw. eine Querauslenkung derselben zu bewirken. Die zweite Bahnlauf-Korrekturvorrichtung 34 ist imstande, einen Bahnlauf der einseitig kaschierten zweiten Wellpappebahn 17 zu beeinflussen bzw. eine Querauslenkung derselben zu bewirken.

Stromabwärts zu der Bahnlauf-Korrekturanordnung 32 und der Kaschierbahn-Splicevorrichtung 27 ist ein Leimwerk 35 der Wellpappeanlage angeordnet. Das Leimwerk 35 folgt insbesondere unmittelbar auf die Brücke 15 und die Kaschierbahn-Splicevorrichtung 27. Ein horizontaler Abstand zwischen der Kaschierbahn-Splicevorrichtung 27 und dem Leimwerk 35 ist vorzugsweise äußerst gering, insbesondere kleiner als 5 Meter. Insbesondere fehlt eine Vorheizanordnung, die ansonsten bekanntlich dem Leimwerk 35 vorgeordnet ist, um die einseitig kaschierten Wellpappebahnen 5, 17 und die endlose Kaschierbahn 30 vor ihrer Verleimung bzw. Verklebung miteinander vorzuheizen.

Das Leimwerk 35 hat eine erste Beleimungswalze, die teilweise in ein erstes Leimbad eingetaucht ist. Die einseitig kaschierte erste Wellpappebahn 5 befindet sich mit ihrer Wellbahn in Kontakt mit der ersten Beleimungswalze und wird so mit Leim aus dem ersten Leimbad versehen. An der ersten Beleimungswalze liegt umfangsseitig eine erste Dosierwalze an, um einen gleichmäßigen Leimfilm auf der ersten Beleimungswalze auszubilden.

Ferner hat das Leimwerk 35 eine zweite Beleimungswalze, die teilweise in ein zweites Leimbad eingetaucht ist. Die einseitig kaschierte zweite Wellpappebahn 17 befindet sich mit ihrer Wellbahn in Kontakt mit der zweiten Beleimungswalze und wird so mit Leim aus dem zweiten Leimbad versehen. An der zweiten Beleimungswalze liegt umfangsseitig eine zweite Dosierwalze an, um einen gleichmäßigen Leimfilm auf der zweiten Beleimungswalze auszubilden.

Die endlose Kaschierbahn 30 läuft in dem Leimwerk 35 unterhalb der einseitig kaschierten Wellpappebahnen 5, 17.

In dem Leimwerk 35 wird ein Leim eingesetzt, der Verarbeitungstemperaturen von unter 70° C erlaubt.

Stromaufwärts zu dem Leimwerk 35 hat die Wellpappeanlage eine Verpressvorrichtung 36, die einen über obere Führungswalzen geführten oberen Verpressgurt und einen über untere Führungswalzen geführten unteren Verpressgurt umfasst. Ein Untergurt des oberen Verpressgurts und ein Obergurt des unteren Verpressgurts verlaufen horizontal und benachbart zueinander. Sie bilden eine Verpressstrecke aus. Durch die Verpressstrecke sind die einseitig kaschierten, beleimten Wellpappebahnen 5, 17 und die endlose Kaschierbahn 30 geführt. In der Verpressvorrichtung 36 wird die endlose Wellpappebahn 1 gebildet, die zweiseitig kaschiert und insgesamt fünflagig ist. Die Verpressvorrichtung 36 bildet somit eine Vorrichtung zum Herstellen einer zweiseitig kaschierten Wellpappebahn 1. Die Führungswalzen verlaufen in Breitenrichtung der zweiseitig kaschierten Wellpappebahn 1.

Stromabwärts zu dem Leimwerk 35 hat die Wellpappeanlage eine erste Zugvorrichtung 37 mit einer ersten Zugeinrichtung 38 und einer zweiten Zugeinrichtung 39, die benachbart zu der ersten Zugeinrichtung 38 angeordnet ist und mit dieser einen ersten Zugspalt 40 ausbildet.

Die erste Zugeinrichtung 38 umfasst zwei in der Förderrichtung 3 der Wellpappeanlage beabstandet angeordnete erste Führungsrollen 41 und einen um die ersten Führungsrollen 41 geführten ersten Zuggurt 42. Die Führungsrollen 41 verlaufen senkrecht zu der Förderrichtung 3 bzw. zu einer Breitenrichtung der zweiseitig kaschierten Wellpappebahn 1. Mindestens eine der ersten Führungsrollen 41 ist drehantreibbar.

Die zweite Zugeinrichtung 39 ist entsprechend der ersten Zugeinrichtung 38 ausgeführt. Diese ist unterhalb der ersten Zugeinrichtung 38 angeordnet und umfasst zwei in der Förderrichtung 3 der Wellpappeanlage beabstandet zueinander angeordnete zweite Führungsrollen 43 sowie einen um die zweiten Führungsrollen 43 geführten zweiten Zuggurt 44. Die zweiten Führungsrollen 43 erstrecken sich senkrecht zu der Förderrichtung 3 bzw. zu einer Breitenrichtung der zweiseitig kaschierten Wellpappebahn 1. Mindestens eine der zweiten Führungsrollen 43 ist drehantreibbar.

Der erste Zuggurt 42 hat einen ersten Untergurt 45, der sich längs der Förderrichtung 3 erstreckt und sich längs derselben bewegt. Der zweite Zuggurt 44 hat einen zweiten Obergurt 46, der sich längs der Förderrichtung 3 und benachbart zu dem ersten Untergurt 45 erstreckt. Der zweite Obergurt 46 bewegt sich längs der Förderrichtung 3. Der erste Untergurt 45 und der zweite Obergurt 46 verlaufen benachbart und beabstandet unter Begrenzung des ersten Zugspalts 40 zueinander.

Die zweiseitig kaschierte Wellpappebahn 1 ist durch den ersten Zugspalt 40 geführt. Dort greifen der erste Zuggurt 42 und der zweite Zuggurt 44 gegenüberliegend an der zweiseitig kaschierten Wellpappebahn 1 an und pressen diese zusammen. Die erste Zugvorrichtung 37 kann eine Förderung der zweiseitig kaschierten Wellpappebahn 1 in der Förderrichtung 3 unterstützen, was nachfolgend eine Reduzierung der Bahnspannung der zweiseitig kaschierten Wellpappebahn 1 bewirkt. Sie kann auf die zweiseitig kaschierte Wellpappebahn 1 auch ein Bremsmoment bzw. eine Bremskraft aufbringen, was nachfolgend eine Erhöhung der Bahnspannung der zweiseitig kaschierten Wellpappebahn 1 bewirkt.

Stromabwärts zu der ersten Zugvorrichtung 37 hat die Wellpappeanlage eine Inspektionsanordnung 47, die die zweiseitig kaschierte Wellpappebahn 1 insbesondere auf ihrer Außenseite bzw. Druckseite 48 auf Fehler hin inspiziert. Die Außenseite 48 ist günstigerweise nach oben gewandt und der endlosen Kaschierbahn 30 abgewandt. Sie liegt an der äußeren endlosen Deckbahn vor. Beispielsweise erfolgt eine sensorische Inspektion in Hinblick auf Planheit bzw. Ebenheit. Die Inspektionsanordnung 47 ist oberhalb der einseitig kaschierten Wellpappebahn 1 angeordnet.

Stromabwärts zu der Inspektionsanordnung 47 hat die Wellpappeanlage eine Druckanordnung 49.

Die Druckanordnung 49 hat eine Vorbeschichtungs-Auftragsvorrichtung 50, die der Inspektionsanordnung 47 nachgeordnet und eingangsseitig in Bezug auf die Druckanordnung 49 angeordnet ist. Die Vorbeschichtungs-Auftragsvorrichtung 50 ist oberhalb der einseitig kaschierten Wellpappebahn 1 angeordnet und ist imstande, auf die Außenseite 48 der zweiseitig kaschierten Wellpappebahn 1 eine flächige Vorbeschichtung aufzubringen. Die Vorbeschichtungs-Auftragsvorrichtung 50 nutzt dazu günstigerweise mindestens eine Vorbeschichtungswalze, die sich horizontal und senkrecht zu der Förderrichtung 3 der zweiseitig kaschierten Wellpappebahn 1 erstreckt. Die mindestens eine Vorbeschichtungswalze ist vorzugsweise in ein auftragbares Vorbeschichtungsmittel eingetaucht.

Die Druckanordnung 49 hat außerdem eine erste Infrarot-Trocknungsvorrichtung 51, die der Vorbeschichtungs-Auftragsvorrichtung 50 nachgeordnet und oberhalb der zweiseitig kaschierten Wellpappebahn 1 angeordnet ist. Die erste Infrarot-Trocknungsvorrichtung 51 erstreckt sich horizontal und trocknet die vorbeschichtete zweiseitig kaschierte Wellpappebahn 1 bzw. deren Vorbeschichtung mittels Infrarotstrahlung. Sie ist vorzugsweise auch imstande, den durch das Leimwerk 35 aufgebrachten Leim in der zweiseitig kaschierten Wellpappebahn 1 zu trocknen. Die erste Infrarot-Trocknungsvorrichtung 51 ist benachbart zu der zweiseitig kaschierten Wellpappebahn 1 angeordnet.

Der ersten Infrarot-Trocknungsvorrichtung 51 ist eine erste Heißluft-Trocknungsvorrichtung 52 der Druckanordnung 49 nachgeordnet, die der zweiseitig kaschierten Wellpappebahn 1 zugeordnet ist und die bereits etwas getrocknete zweiseitig kaschierte Wellpappebahn 1 bzw. deren bereits etwas getrocknete Vorbeschichtung weiter mittels Heißluft trocknet. Die erste Heißluft-Trocknungsvorrichtung 52 ist vorzugsweise auch imstande, den durch das Leimwerk 35 aufgebrachten Leim in der zweiseitig kaschierten Wellpappebahn 1 zu trocknen. Sie erstreckt sich horizontal und folgt unmittelbar der ersten Infrarot-Trocknungsvorrichtung 51.

Die Druckanordnung 49 hat ferner eine Kühlvorrichtung 53, die der ersten Heißluft-Trocknungsvorrichtung 52 nachgeordnet und der zweiseitig kaschierten Wellpappebahn 1 zugeordnet ist. Die Kühlvorrichtung 53 ist oberhalb der zweiseitig kaschierten Wellpappebahn 1 angeordnet. Sie kühlt die zweiseitig kaschierte Wellpappebahn 1 bzw. die bereits getrocknete Vorbeschichtung.

Die Vorbeschichtungs-Auftragsvorrichtung 50, die erste Infrarot-Trocknungsvorrichtung 51, die erste Heißluft-Trocknungsvorrichtung 52 und die Kühlvorrichtung 53 bilden vorzugsweise eine Vorbeschichtungsanordnung der Druckanordnung 49.

Die Druckanordnung 49 hat ferner eine Geschwindigkeits-Messvorrichtung 54, die der zweiseitig kaschierten Wellpappebahn 1 zugeordnet und oberhalb derselben angeordnet ist. Die Geschwindigkeits-Messvorrichtung 54 ist imstande, dort eine Fördergeschwindigkeit der zweiseitig kaschierten Wellpappebahn 1 in der Förderrichtung 3 zu messen bzw. zu ermitteln. Sie steht mit einer elektronischen Betätigungseinheit in Signalverbindung.

Die Druckanordnung 49 weist ferner eine Inkjet-Druckvorrichtung 55 auf, die der zweiseitig kaschierten Wellpappebahn 1 zugeordnet und oberhalb derselben angeordnet ist. Die Inkjet-Druckvorrichtung 55 ist der Geschwindigkeits-Messvorrichtung 54 nachgeordnet. Sie steht mit der elektronischen Betätigungseinheit in Signalverbindung. Der Abstand zwischen der Inkjet-Druckvorrichtung 55 und der Geschwindigkeits-Messvorrichtung 54 ist kleiner als 1 Meter und bekannt.

Die Inkjet-Druckvorrichtung 55 ist imstande, die zweiseitig kaschierte Wellpappebahn 1 auf deren Außenseite 48 bzw. die endlose erste/äußere Deckbahn der zweiseitig kaschierten Wellpappebahn 1 zu bedrucken, wodurch diese, insbesondere zumindest außenseitig, erwärmt wird. Insbesondere ist sie imstande, auf die zweiseitig kaschierte Wellpappebahn 1 bzw. auf die gekühlte getrocknete Vorbeschichtung mindestens einen Aufdruck aufzudrucken. Die Vorbeschichtung befindet sich somit zwischen dem mindestens einen Aufdruck und der eigentlichen zweiseitig kaschierten Wellpappebahn 1. Der mindestens eine Aufdruck ist vorzugsweise ein Farbaufdruck. Er befindet sich auf der Druckseite 48 der zweiseitig kaschierten Wellpappebahn 1 bzw. auf der endlosen ersten/äußeren Deckbahn.

Es ist von Vorteil, wenn die Inkjet-Druckvorrichtung 55 mehrere Druccköpfe aufweist, die sich über die Breite der zweiseitig kaschierten Wellpappebahn 1 erstrecken. Die Druckköpfe sind günstigerweise in Reihen hintereinander in der Förderrichtung 3 angeordnet.

Die Druckanordnung 49 hat außerdem eine zweite Infrarot-Trocknungsvorrichtung 56, die der Inkjet-Druckvorrichtung 55 nachgeordnet und der zweiseitig kaschierten Wellpappebahn 1 zugeordnet ist. Die zweite Infrarot-Trocknungsvorrichtung 56 erstreckt sich horizontal und trocknet die bedruckte zweiseitig kaschierte Wellpappebahn 1 bzw. deren mindestens einen Aufdruck mittels Infrarotstrahlung. Sie ist vorzugsweise imstande, eine Krümmung, sofern vorhanden, der zweiseitig kaschierten Wellpappebahn 1 zu reduzieren. Die zweite Infrarot-Trocknungsvorrichtung 56 ist oberhalb der zweiseitig kaschierten Wellpappebahn 1 angeordnet.

Die Druckanordnung 49 umfasst außerdem eine zweite Heißluft-Trocknungsvorrichtung 57, die der zweiten Infrarot-Trocknungsvorrichtung 56 nachgeordnet und der zweiseitig kaschierten Wellpappebahn 1 zugeordnet ist. Die zweite Heißluft-Trocknungsvorrichtung 57 trocknet die bereits etwas getrocknete zweiseitig kaschierte Wellpappebahn 1 bzw. deren bereits etwas getrockneten mindestens einen Aufdruck weiter mittels Heißluft. Sie ist vorzugsweise imstande, eine Krümmung, sofern vorhanden, der zweiseitig kaschierten Wellpappebahn 1 zu reduzieren. Die zweite Heißluft-Trocknungsvorrichtung 57 erstreckt sich horizontal und folgt unmittelbar der zweiten Infrarot-Trocknungsvorrichtung 56.

Die Druckanordnung 49 hat außerdem mehrere Führungstische 78, die sich jeweils längs der Förderrichtung 3 erstrecken und bezüglich der Förderrichtung 3 hintereinander angeordnet sind.

Die Führungstische 78, die Bestandteil einer Führungsvorrichtung sind, haben nach oben gewandte Führungsflächen 79 zum Führen bzw. Tragen der zweiseitig kaschierten Wellpappebahn 1. Die Führungsflächen 79 sind aus einer verschleißfesten bzw. reibarmen Beschichtung, wie Keramik, gebildet. Die Führungsflächen 79 sind, beispielsweise durch Heizplatten, beheizt.

Die Führungstische 78 sind unterhalb der Vorbeschichtungs-Auftragsvorrichtung 50, der Infrarot-Trocknungsvorrichtung 51, der Heißluft-Trocknungsvorrichtung 52, der Kühlvorrichtung 53, der Geschwindigkeits-Messvorrichtung 54, der Inkjet-Druckvorrichtung 55, der zweiten Infrarot-Trocknungsvorrichtung 56 und der zweiten Heißluft-Trocknungsvorrichtung 57 angeordnet. So wird ein Führungsspalt für die zweiseitig kaschierte Wellpappebahn 1 zwischen den Führungstischen 78 und den genannten Vorrichtungen 50, 51, 52, 53, 54, 55, 56, 57 gebildet.

Die Führungstische 78 sind als Vakuumtische ausgebildet. In den Führungsflächen 79 befinden sich zum Ansaugen der zweiseitig kaschierten Wellpappebahn 1 Ansaugöffnungen, die mit Vakuumpumpen 80 in Strömungsverbindung stehen und benachbart zu der zweiseitig kaschierten Wellpappebahn 1 ausmünden.

Die Führungstische 78 sind in der Förderrichtung 3, insbesondere konvex, gekrümmt.

Unterhalb der ersten Heißluft-Trocknungsvorrichtung 52 ist eine Marken-Leseanordnung 81 angeordnet. Die Marken-Leseanordnung 81 ist unterhalb der zweiseitig kaschierten Wellpappebahn 1 zwischen zwei Führungstischen 78 angeordnet. Die Marken-Leseanordnung 81 ist imstande, Marken auf der endlosen Kaschierbahn 30 zu erfassen. Sie steht mit der elektronischen Betätigungseinheit in Signalverbindung. Andere Leseanordnungen sind alternativ einsetzbar.

Die Wellpappeanlage hat eine Bedruckungs-Synchronisationsvorrichtung, die mit der elektronischen Betätigungseinheit in Signalverbindung steht. Die Bedruckungs-Synchronisationsvorrichtung ist imstande, auf Basis der detektierten Marken auf der endlosen Kaschierbahn 30 die Bedruckung durch die Inkjet-Druckvorrichtung 55 und die zweiseitig kaschierte Wellpappebahn 1 aneinander anzupassen. Insbesondere nutzt dazu die elektronische Betätigungseinheit die durch die Marken-Leseanordnung 81 erfassten Marken und die durch die Geschwindigkeits-Messvorrichtung 54 gemessene Fördergeschwindigkeit der zweiseitig kaschierten Wellpappebahn 1. Die elektronische Betätigungseinheit betätigt entsprechend eine Bedruckungs-Synchronisationseinrichtung. Beispielsweise ist die Inkjet-Druckvorrichtung 55 und/oder die zweiseitig kaschierte Wellpappebahn 1 entsprechend beeinflussbar.

Stromabwärts zu der zweiten Heißluft-Trocknungsvorrichtung 57 hat die Wellpappeanlage eine Feuchtigkeits-Messvorrichtung 58, die der zweiseitig kaschierten Wellpappebahn 1 zugeordnet und oberhalb derselben angeordnet ist. Die Feuchtigkeits-Messvorrichtung 58 misst eine Feuchtigkeit der bedruckten zweiseitig kaschierten Wellpappebahn 1 bzw. des mindestens einen Aufdrucks. Gegebenenfalls wird die Feuchtigkeit geändert.

Ferner umfasst die Wellpappeanlage eine Druckbild-Überwachungseinrichtung 59, die der Feuchtigkeits-Messvorrichtung 58 nachgeordnet und oberhalb der zweiseitig kaschierten Wellpappebahn 1 angeordnet ist. Die Druckbild-Überwachungseinrichtung 59 ist imstande, den mindestens einen Aufdruck bzw. das Druckbild auf der zweiseitig kaschierten Wellpappebahn 1 zu überwachen, insbesondere hinsichtlich Ausrichtung, Qualität und/oder Richtigkeit. Gegebenenfalls wird das Druckbild korrigiert.

Die Wellpappeanlage weist außerdem eine zweite Zugvorrichtung 60 auf, die entsprechend der ersten Zugvorrichtung 37 ausgebildet und der Druckbild-Überwachungseinrichtung 59 nachgeordnet ist. Die zweite Zugvorrichtung 60 umfasst eine dritte Zugeinrichtung 61 und eine vierte Zugeinrichtung 62, die benachbart zu der dritten Zugeinrichtung 61 angeordnet ist. Die dritte Zugeinrichtung 61 und die vierte Zugeinrichtung 62 begrenzen einen zweiten Zugspalt 63.

Die dritte Zugeinrichtung 61 hat zwei dritte Führungsrollen 64, die in der Förderrichtung 3 beabstandet zueinander angeordnet sind und senkrecht zu der Förderrichtung 3 verlaufen. Ferner hat die dritte Zugeinrichtung 61 einen dritten Zuggurt 65, der um die dritten Führungsrollen 64 geführt ist. Mindestens eine der dritten Führungsrollen 64 ist drehantreibbar.

Die vierte Zugeinrichtung 64 ist unterhalb der dritten Zugeinrichtung 61 angeordnet. Sie hat zwei vierte Führungsrollen 66, die in der Förderrichtung 3 beabstandet zueinander angeordnet sind und senkrecht zu der Förderrichtung 3 verlaufen. Die vierte Zugeinrichtung 62 weist ferner einen vierten Zuggurt 67 auf, der um die vierten Führungsrollen 66 geführt ist. Mindestens eine der vierten Führungsrollen 66 ist drehantreibbar.

Der dritte Zuggurt 65 hat einen dritten Untergurt 68, der sich längs der Förderrichtung 3 erstreckt und sich längs derselben bewegt. Der vierte Zuggurt 67 hat einen vierten Obergurt 69, der sich längs der Förderrichtung 3 und benachbart zu dem dritten Untergurt 68 erstreckt. Der vierte Obergurt 69 bewegt sich längs der Förderrichtung 3. Der dritte Untergurt 68 und der vierte Obergurt 69 verlaufen benachbart und beabstandet unter Begrenzung des zweiten Zugspalts 63 zueinander.

Die zweiseitig kaschierte Wellpappebahn 1 ist durch den zweiten Zugspalt 63 geführt. Dort greifen der dritte Zuggurt 65 und der vierte Zuggurt 67 gegenüberliegend an der zweiseitig kaschierten Wellpappebahn 1 an und pressen diese zusammen. Die zweite Zugvorrichtung 60 kann eine Förderung der zweiseitig kaschierten Wellpappebahn 1 in der Förderrichtung 3 unterstützen. Sie kann auf die zweiseitig kaschierte Wellpappebahn 1 auch ein Bremsmoment bzw. eine Bremskraft aufbringen. Die zweite Zugvorrichtung 60 kann eine Förderung der zweiseitig kaschierten Wellpappebahn 1 in der Förderrichtung 3 unterstützen, was in der Druckanordnung 49 eine Erhöhung der Bahnspannung der zweiseitig kaschierten Wellpappebahn 1 bewirkt. Sie kann auf die zweiseitig kaschierte Wellpappebahn 1 auch ein Bremsmoment bzw. eine Bremskraft aufbringen, was in der Druckanordnung eine Reduzierung der Bahnspannung der zweiseitig kaschierten Wellpappebahn 1 bewirkt.

Stromabwärts zu der zweiten Zugvorrichtung 60 hat die Wellpappeanlage eine Kurz-Querschneidevorrichtung 70, die einen Messerzylinder und einen unterhalb desselben angeordneten Gegenzylinder umfasst. Der Messerzylinder und Gegenzylinder sind drehbar bzw. drehantreibbar gelagert. Die Kurz-Querschneidevorrichtung 70 ist imstande, einen Schnitt zu erzeugen, der sich über die volle Breite der zweiseitig kaschierten Wellpappebahn 1 erstreckt. Dazu werden der Messerzylinder und Gegenzylinder derart in Rotation versetzt, dass sie beim Schneidvorgang miteinander wechselwirken. Ferner ist die Kurz-Querschneidevorrichtung 70 imstande, einen Schnitt mit einer bestimmten Länge und einem bestimmten Abstand von einem Längsrand der zweiseitig kaschierten Wellpappebahn 1 zu erzeugen. Dazu werden Gegenkörper-Elemente des Gegenzylinders entsprechend gewählt bzw. verstellt. Für den Schneidvorgang werden der Messerzylinder und der Gegenzylinder derart in Rotation versetzt, dass ein Messer des Messerzylinders mit den Gegenkörper-Elementen wechselwirkt.

Stromabwärts zu der Kurz-Querschneidevorrichtung 70 hat die Wellpappeanlage eine Längsschneide-/Rillvorrichtung 71 mit zwei Rilleinheiten und zwei diesen nachgeordneten Längsschneideeinheiten. Die Längsschneideeinheiten sind imstande, die zweiseitig kaschierte Wellpappebahn 1 unter Bildung von Teil-Wellpappebahnen in der Förderrichtung 3 zu schneiden. Die Rilleinheiten sind imstande, die zweiseitig kaschierte Wellpappebahn 1 zu rillen, um ein späteres Falten zu vereinfachen.

Stromabwärts zu der Längsschneide-/Rillvorrichtung 71 ist eine Weiche 72 der Wellpappeanlage zum Aufteilen der erzeugten Teil-Wellpappebahnen in zwei unterschiedliche Ebenen vorgesehen.

Stromabwärts zu der Weiche 72 hat die Wellpappeanlage eine Querschneidevorrichtung 73 mit zwei übereinander angeordneten Teil-Querschneideeinrichtungen. Jede Teil-Querschneideeinrichtung hat zwei drehantreibbare, übereinander angeordnete, sich senkrecht zu der Förderrichtung 3 erstreckende Querschneidewalzen mit radial nach außen erstreckenden Querschneidemessern zur vollständigen Querdurchtrennung der jeweiligen Teil-Wellpappebahn unter Erzeugung der Wellpappebögen 2. Vorzugsweise handelt es sich bei den durch die Marken-Leseanordnung 81 erfassbaren Marken um Marken, die auch zur Synchronisierung der Teil-Querschneideeinrichtungen eingesetzt werden.

Stromabwärts zu jeder Teil-Querschneideeinrichtung ist ein Förderband 74, 75 angeordnet, auf dem die außenseitig bedruckten Wellpappebögen 2 zu einer jeweiligen Stapelablage 76 bzw. 77 geführt werden.

Alternativ zu den Führungstischen 78 sind Fördereinrichtungen mit antreibbaren Förderelementen zum Fördern der zweiseitig kaschierten Wellpappebahn 1 in der Förderrichtung 3 in der Druckanordnung 49 vorgesehen.

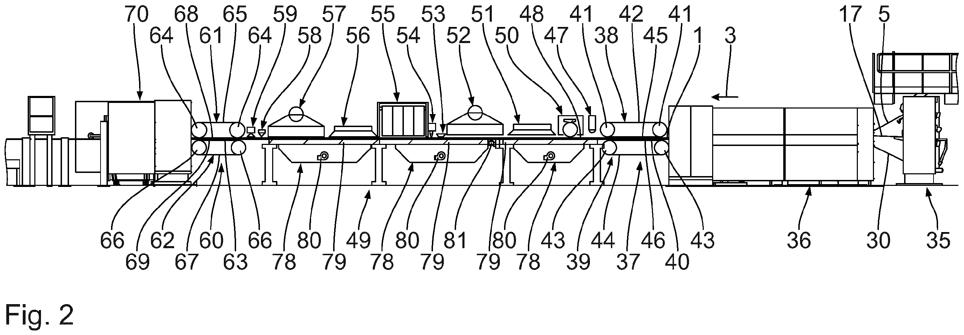

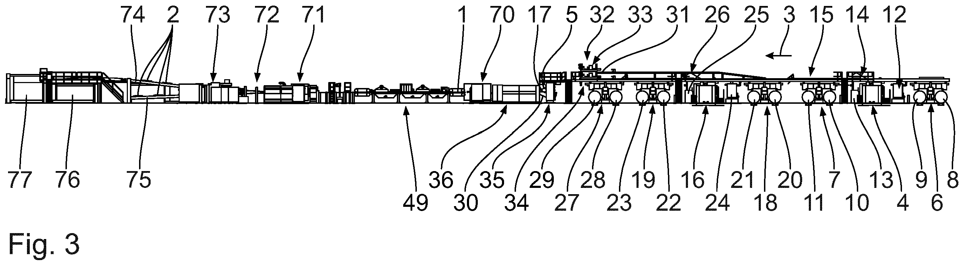

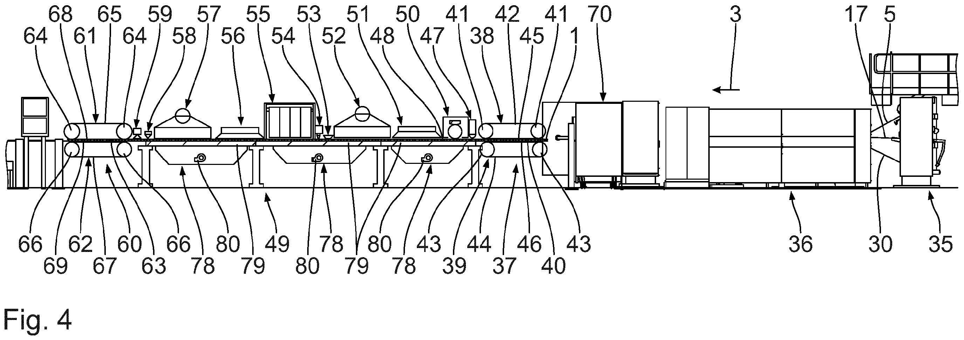

Nachfolgend wird unter Bezugnahme auf die Figuren 3, 4 die zweite Ausführungsform beschrieben. Im Vergleich zu der ersten Ausführungsform gemäß Figuren 1, 2, auf deren Beschreibung hiermit explizit verwiesen wird, ist die Kurz-Querschneidevorrichtung 70 der ersten Zugvorrichtung 37 vorgeordnet. Die Kurz-Querschneidevorrichtung 70 ist zwischen der ersten Zugvorrichtung 37 und der Verpressvorrichtung 36 angeordnet. Sie ist somit der Druckanordnung 49 vorgeordnet.

Vorteilhaft hierbei ist, dass die Kurz-Querschneidevorrichtung 70 fehlerhafte Wellpappeteile bereits vor der Inkjet-Druckvorrichtung 55 ausschleust, was eine Beschädigung der Inkjet-Druckvorrichtung 55 verhindert.

Bei der ersten Ausführungsform liegen dagegen bei einer Ausschleusung fehlerhafter Wellpappeteile durch die Kurz-Querschneidevorrichtung 70 bei der Inkjet-Druckvorrichtung 55 keine neuen vorauseilenden Stoßkanten vor. Die Kurz-Querschneidevorrichtung 70 ist gemäß der ersten Ausführungsform der Inkjet-Druckvorrichtung 55 nachgeordnet.

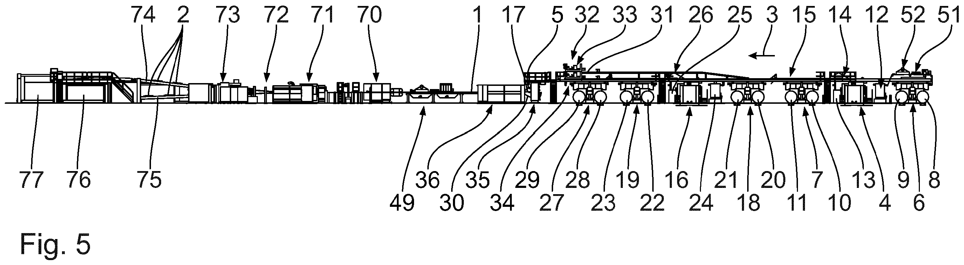

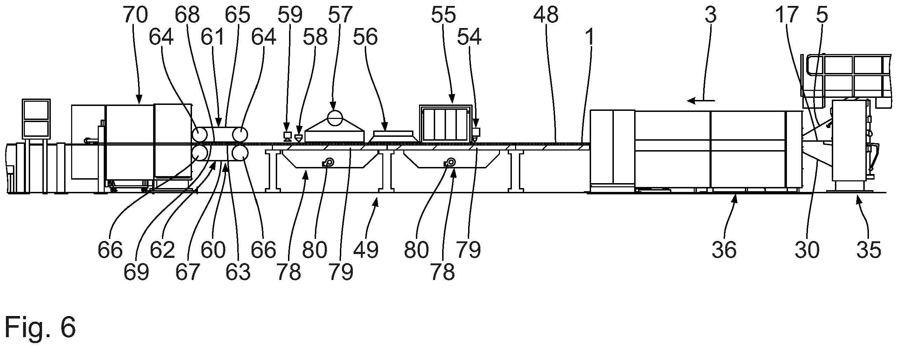

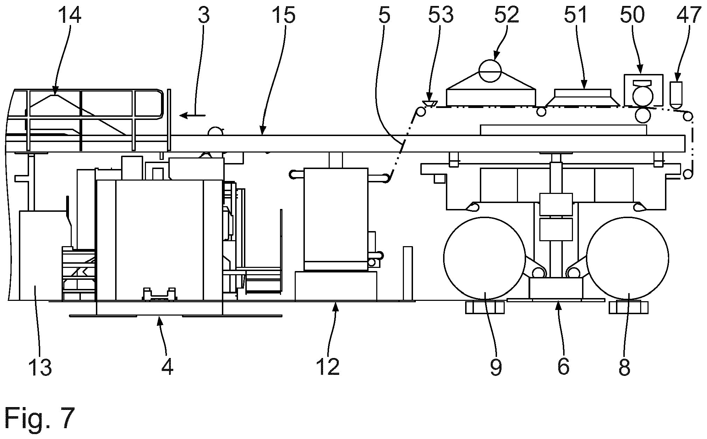

Nachfolgend wird unter Bezugnahme auf die Figuren 5 bis 7 eine dritte Ausführungsform beschrieben. Im Vergleich mit der ersten Ausführungsform, auf deren Beschreibung hiermit explizit verwiesen wird, ist bei dieser Ausführungsform die erste separate Zugvorrichtung 37 weggelassen.

Die Inspektionsanordnung 47, die Vorbeschichtungs-Auftragsvorrichtung 50, die Infrarot-Trocknungsvorrichtung 51 und die Heißluft-Trocknungsvorrichtung 52 sowie die Kühlvorrichtung 53 sind bei dieser Ausführungsform nicht länger der Verpressvorrichtung 36 nachgeordnet, sondern zwischen der ersten Deckbahn-Splicevorrichtung 6 und der ersten Vorrichtung 4 zum Herstellen einer einseitig kaschierten ersten Wellpappebahn 5 angeordnet. Sie sind oberhalb der ersten Deckbahn-Splicevorrichtung 6 angeordnet und der endlosen ersten Deckbahn zugeordnet, sodass bereits die endlose erste Deckbahn vor der ersten Vorrichtung 4 zum Herstellen einer einseitig kaschierten ersten Wellpappebahn 5 mittels der Inspektionsanordnung 47 inspiziert und mittels der Vorbeschichtungs-Auftragsvorrichtung 50 flächig vorbeschichtet wird. Die vorbeschichtete endlose erste Deckbahn wird in der Infrarot-Trocknungsvorrichtung 51 und Heißluft-Trocknungsvorrichtung 52 getrocknet und in der Kühlvorrichtung 53 gekühlt. Sie wird dann in die erste Vorrichtung 4 zum Herstellen einer einseitig kaschierten ersten Wellpappebahn 5 geführt.

Die Vorbeschichtungs-Auftragsvorrichtung 50, die Infrarot-Trocknungsvorrichtung 51 und die Heißluft-Trocknungsvorrichtung 52 sowie die Kühlvorrichtung 53 bilden eine Vorbeschichtungsanordnung.

Die erste Zugvorrichtung 37 fehlt bei dieser Ausführungsform. Die Verpressvorrichtung 36 sorgt für die notwendige Bahnspannung der zweiseitig kaschierten Wellpappebahn 1 in der Druckanordnung 49. Sie übernimmt die Funktion der ersten Zugvorrichtung 37 der vorherigen Ausführungsformen.

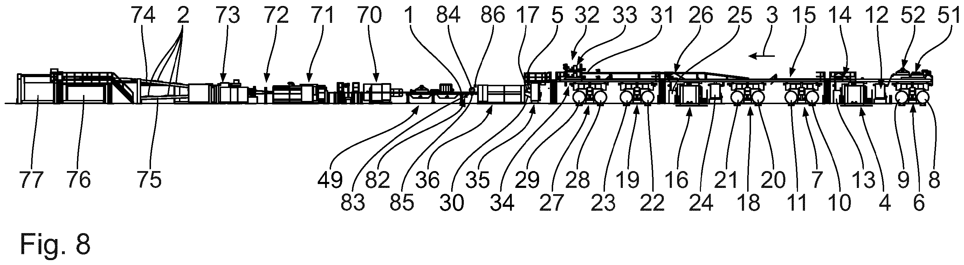

Nachfolgend wird unter Bezugnahme auf die Figur 8 eine vierte Ausführungsform beschrieben. Im Vergleich mit der dritten Ausführungsform, auf deren Beschreibung hiermit explizit verwiesen wird, ist bei dieser Ausführungsform zwischen der Verpressvorrichtung 36 und der Inkjet-Druckvorrichtung 55 eine Randbeschnittvorrichtung 82 angeordnet, die der zweiseitig kaschierten Wellpappebahn 1 zugeordnet ist und eine als Absaugtüte ausgebildete Randstreifenabführeinrichtung 83 zum Abführen abgetrennter Randstreifen der zweiseitig kaschierten Wellpappebahn 1 aufweist. Die Randbeschnittvorrichtung 82 hat mindestens eine obere Bürstenwalze 84 und untere Kreismesser 85, deren Rotationsachse senkrecht zu der Förderrichtung der zweiseitig kaschierten Wellpappebahn 1 verläuft. Die zweiseitig kaschierte Wellpappebahn 1 ist zwischen der mindestens einen Bürstenwalze 84 und dem mindestens einen Kreismesser 85 hindurchgeführt. Bei einem Randbeschnitt ist mindestens ein Kreismesser 85 unter Erzeugung von mindestens einem Randstreifen aktiv. Es greift dann schneidend in die zweiseitig kaschierte Wellpappebahn 1.

Zwischen der Verpressvorrichtung 36 und der Randbeschnittvorrichtung 82 ist eine Druckbilderfassungsanordnung 86 angeordnet, die der zweiseitig kaschierten Wellpappebahn 1 zugeordnet ist und deren Druckbereiche bzw. Druckbilder erfasst. Die Druckbilderfassungsanordnung 86 steht mit der Längsschneide-/Rillvorrichtung 71 zum Betätigen derselben in Signalverbindung. Die Längsschneide-/Rillvorrichtung 71 wird derart betätigt, dass die Druckbereiche bzw. Druckbilder unbeschädigt bleiben.

## Patentansprüche

1. Wellpappeanlage zum Herstellen von Wellpappe, umfassend
a) mindestens eine Vorrichtung (4, 16) zum Herstellen einer jeweiligen einseitig kaschierten Wellpappebahn (5, 17) aus einer jeweiligen Deckbahn und Materialbahn,
b) eine Kaschierbahn-Abgabevorrichtung (27) zum Abgeben einer Kaschierbahn (30),
c) eine der Kaschierbahn-Abgabevorrichtung (27) und der mindestens einen Vorrichtung (4, 16) zum Herstellen einer jeweiligen einseitig kaschierten Wellpappebahn (5, 17) nachgeordnete, mindestens eine Verpressstrecke aufweisende Vorrichtung (36) zum Herstellen einer zweiseitig kaschierten Wellpappebahn (1) aus der mindestens einen einseitig kaschierten Wellpappebahn (5, 17) und der Kaschierbahn (30),
d) eine der Vorrichtung (36) zum Herstellen einer zweiseitig kaschierten Wellpappebahn (1) nachgeordnete Druckanordnung (49) mit mindestens einer Digitaldruckvorrichtung (55) zum Bedrucken der zweiseitig kaschierten Wellpappebahn (1), und
e) eine der Druckanordnung (49) nachgeordnete Querschneidevorrichtung (73) zum Querschneiden der zweiseitig kaschierten Wellpappebahn (1) unter Bildung von Wellpappebögen (2),
**gekennzeichnet durch**
f) eine benachbart zu der mindestens einen Digitaldruckvorrichtung (55) angeordnete Zuganordnung zum Beeinflussen einer Bahnspannung der zweiseitig kaschierten Wellpappebahn (1) in der Druckanordnung (49).

2. Wellpappeanlage nach Anspruch 1, **dadurch gekennzeichnet, dass** die Zuganordnung eine erste Zugvorrichtung (37) umfasst, die der mindestens einen Digitaldruckvorrichtung (55) vorgeordnet ist.

3. Wellpappeanlage nach Anspruch 1 oder 2, **dadurch gekennzeichnet, dass** die Zuganordnung eine zweite Zugvorrichtung (60) umfasst, die der mindestens einen Digitaldruckvorrichtung (55) nachgeordnet ist.

4. Wellpappeanlage nach Anspruch 2 und/oder 3, **dadurch gekennzeichnet, dass** die erste und/oder zweite Zugvorrichtung (37, 60) mindestens ein antreibbares Zugelement (42, 65) und mindestens ein diesem unter Begrenzung mindestens eines Zugspalts (40, 63) zum Hindurchführen der zweiseitig kaschierten Wellpappebahn (1) zugeordnetes Gegenelement (44, 67) umfasst.

5. Wellpappeanlage nach einem der vorherigen Ansprüche, **dadurch gekennzeichnet, dass** die Druckanordnung (49) einer Längsschneide-/Rillvorrichtung (71) zum Längsschneiden und/oder Rillen der zweiseitig kaschierten Wellpappebahn (1) vorgeordnet ist.

6. Wellpappeanlage nach einem der vorherigen Ansprüche, **dadurch gekennzeichnet, dass** der Druckanordnung (49) eine Kurz-Querschneidevorrichtung (70) vorgeordnet ist.

7. Wellpappeanlage nach einem der Ansprüche 1 bis 5, **dadurch gekennzeichnet, dass** der Druckanordnung (49) eine Kurz-Querschneidevorrichtung (70) nachgeordnet ist.

8. Wellpappeanlage nach einem der vorherigen Ansprüche, **dadurch gekennzeichnet, dass** die Druckanordnung (49) eine Bedruckungs-Synchronisationsanordnung zum Synchronisieren einer Bedruckung durch die mindestens eine Digitaldruckvorrichtung (55) mit der zweiseitig kaschierten Wellpappebahn (1) umfasst, wobei vorzugsweise die Bedruckungs-Synchronisationsanordnung mindestens eine Leseanordnung (81) zum Lesen von Synchronisationsinformationen auf der zweiseitig kaschierten Wellpappebahn (1) umfasst.

9. Wellpappeanlage nach einem der vorherigen Ansprüche, **dadurch gekennzeichnet, dass** die Druckanordnung (49) eine Bahngeschwindigkeits-Messvorrichtung (54) zum Messen einer Fördergeschwindigkeit der zweiseitig kaschierten Wellpappebahn (1) aufweist, wobei die Bahngeschwindigkeits-Messvorrichtung (54) der mindestens einen Digitaldruckvorrichtung (55) vorgeordnet, und insbesondere benachbart zu dieser angeordnet, ist und mit einer Betätigungseinheit zum Synchronisieren einer Bedruckung durch die mindestens eine Digitaldruckvorrichtung (55) mit der zweiseitig kaschierten Wellpappebahn (1) in Signalverbindung steht.

10. Wellpappeanlage nach einem der vorherigen Ansprüche, **dadurch gekennzeichnet, dass** die Druckanordnung (49) eine Vakuum-Führungsvorrichtung zum Führen der zweiseitig kaschierten Wellpappebahn (1) umfasst.

11. Wellpappeanlage nach Anspruch 10, **dadurch gekennzeichnet, dass** die Vakuum-Führungsvorrichtung mindestens eine Heizeinrichtung zum Erwärmen der zweiseitig kaschierten Wellpappebahn (1) umfasst.

12. Wellpappeanlage nach Anspruch 10 oder 11, **dadurch gekennzeichnet, dass** die Vakuum-Führungsvorrichtung mindestens einen Führungstisch (78) zum Führen der zweiseitig kaschierten Wellpappebahn (1) umfasst.

13. Wellpappeanlage nach Anspruch 12, **dadurch gekennzeichnet, dass** der mindestens eine Führungstisch (78) in seiner Führungsfläche (79) mindestens eine Ansaugöffnung zum Ansaugen der zweiseitig kaschierten Wellpappebahn (1) an den mindestens einen Führungstisch (78) umfasst.

14. Wellpappeanlage nach Anspruch 12 oder 13, **dadurch gekennzeichnet, dass** der mindestens eine Führungstisch (78) eine Führungsfläche (79) aufweist, die zur Unterstützung einer Andrückung der zweiseitig kaschierten Wellpappebahn (1) an den mindestens einen Führungstisch (78) zumindest bereichsweise gekrümmt ist, wobei vorzugsweise ein Krümmungsradius der gekrümmten Führungsfläche (79) mindestens 2,5 Meter, bevorzugter mindestens 5 Meter, beträgt.

15. Wellpappeanlage nach einem der vorherigen Ansprüche, **dadurch gekennzeichnet, dass** die mindestens eine Digitaldruckvorrichtung (55) zwischen einer Druckstellung und einer Parkstellung, insbesondere geführt, verlagerbar ist, wobei vorzugsweise die Parkstellung seitlich neben der zweiseitig kaschierten Wellpappebahn (1) ist.

16. Wellpappeanlage nach einem der vorherigen Ansprüche, **gekennzeichnet durch** eine Vorbeschichtungsanordnung zum Vorbeschichten der zu bedruckenden Bahn, wobei die Vorbeschichtungsanordnung der Vorrichtung (4) zum Herstellen einer jeweiligen einseitig kaschierten Wellpappebahn (5) mit der vorbeschichteten Bahn vorgeordnet ist.

17. Wellpappeanlage nach einem der vorherigen Ansprüche, **gekennzeichnet durch** eine der mindestens einen Druckvorrichtung (55) vorgeordnete Randbeschnittvorrichtung (82) zum randseitigen Schneiden der zweiseitig kaschierten Wellpappebahn (1).

18. Wellpappeanlage nach Anspruch 17, **dadurch gekennzeichnet, dass** die Randbeschnittvorrichtung (82) abgetrennte Randstreifen der zweiseitig kaschierten Wellpappebahn (1) stromaufwärts zu der mindestens einen Druckvorrichtung (55) abfördert.

19. Wellpappeanlage nach Anspruch 5 und Anspruch 17 oder 18, **gekennzeichnet durch** eine zwischen der Längsschneide-/Rillvorrichtung (71) und der Randbeschnittvorrichtung (82) angeordnete Druckbilderfassungsanordnung (86) zum Betätigen der Längsschneide-/Rillvorrichtung (71).

20. Wellpappeanlage nach einem der vorherigen Ansprüche, **gekennzeichnet durch** mindestens ein Leimwerk (35) zum Auftragen von Leim auf freie Spitzen von mindestens einer einseitig kaschierten Wellpappebahn (5, 17) zur leimenden Verbindung derselben mit einer weiteren Bahn (17, 5, 30) zur Bildung einer zweiseitig kaschierten Wellpappebahn (1), wobei der Leim zum Abbinden und Trocknen auf der mindestens einen einseitig kaschierten Wellpappebahn (5, 17) Verarbeitungstemperaturen von unter 70 °C erlaubt, die günstigerweise zumindest dort an der mindestens einen einseitig kaschierten Wellpappebahn (5, 17) und/oder der Kaschierbahn (30) vorliegen.

## Claims

1. Corrugated cardboard plant for producing corrugated cardboard, comprising
a) at least one device (4, 16) for producing a respective corrugated cardboard web (5, 17) laminated on one side, from a respective cover web and a respective material web;
b) a lamination web dispensing device (27) for dispensing a lamination web (30);
c) a device (36) for producing a corrugated cardboard web (1) laminated on two sides from the at least one corrugated cardboard web (5, 17) laminated on one side and from the lamination web (30), said device (36) for producing a corrugated cardboard web (1) laminated on two sides being disposed downstream of the lamination web dispensing device (27) and of the at least one device (4, 16) for producing a respective corrugated cardboard web (5, 17) laminated on one side, and having at least one compression section;
d) a printing assembly (49) having at least one digital printing device (55) for printing the corrugated cardboard web (1) laminated on two sides, said printing assembly (49) for producing a corrugated cardboard web (1) laminated on two sides being disposed downstream of the device (36) for producing a corrugated cardboard web (1) laminated on two sides; and
e) a transverse cutting device (73) disposed downstream of the printing assembly (49), for transversely cutting the corrugated cardboard web (1) laminated on two sides, while forming corrugated cardboard sheets (2),
**characterized by**
f) a traction assembly for influencing a web tension of the corrugated cardboard web (1) laminated on two sides in the printing assembly (49), said traction assembly being disposed so as to be adjacent to the at least one digital printing device (55).

2. Corrugated cardboard plant according to Claim 1, **characterized in that** the traction assembly comprises a first traction device (37) which is disposed upstream of the at least one digital printing device (55).

3. Corrugated cardboard plant according to Claim 1 or 2, **characterized in that** the traction assembly comprises a second traction device (60) which is disposed downstream of the at least one digital printing device (55).

4. Corrugated cardboard plant according to Claim 2 and/or 3, **characterized in that** the first traction device (37) and/or the second traction device (60) comprise(s) at least one drivable traction element (42, 65), and at least one counter element (44, 67) that is assigned to the former so as to delimit at least one traction gap (40, 63) for guiding therebetween the corrugated cardboard web (1) laminated on two sides.

5. Corrugated cardboard plant according to one of the preceding claims, **characterized in that** the printing assembly (49) is disposed upstream of a longitudinal cutting/grooving device (71) for longitudinally cutting and/or grooving the corrugated cardboard web (1) laminated on two sides.

6. Corrugated cardboard plant according to one of the preceding claims, **characterized in that** a short transverse cutting device (70) is disposed upstream of the printing assembly (49).

7. Corrugated cardboard plant according to one of Claims 1 to 5, **characterized in that** a short transverse cutting device (70) is disposed downstream of the printing assembly (49).

8. Corrugated cardboard plant according to one of the preceding claims, **characterized in that** the printing assembly (49) comprises an imprint synchronization assembly for synchronizing imprinting by the at least one digital printing device (55) with the corrugated cardboard web (1) laminated on two sides, wherein the imprint synchronization assembly preferably comprises at least one reader assembly (81) for reading synchronization information on the corrugated cardboard web (1) laminated on two sides.

9. Corrugated cardboard plant according to one of the preceding claims, **characterized in that** the printing assembly (49) has a web speed measuring device (54) for measuring a conveying speed of the corrugated cardboard web (1) laminated on two sides, wherein the web speed measuring device (54) is disposed upstream of the at least one digital printing device (55) and in particular is disposed so as to be adjacent to said digital printing device (55), and is in signal communication with an activation unit for synchronizing imprinting by the at least one digital printing device (55) with the corrugated cardboard web (1) laminated on two sides.

10. Corrugated cardboard plant according to one of the preceding claims, **characterized in that** the printing assembly (49) comprises a vacuum guiding device for guiding the corrugated cardboard web (1) laminated on two sides.

11. Corrugated cardboard plant according to Claim 10, **characterized in that** the vacuum guiding device comprises at least one heating installation for heating the corrugated cardboard web (1) laminated on two sides.

12. Corrugated cardboard plant according to Claim 10 or 11 **characterized in that** the vacuum guiding device comprises at least one guide table (78) for guiding the corrugated cardboard web (1) laminated on two sides.

13. Corrugated cardboard plant according to Claim 12, **characterized in that** the at least one guide table (78) in the guiding face (79) thereof comprises at least one suction opening for suctioning the corrugated cardboard web (1) laminated on two sides to the at least one guide table (78).

14. Corrugated cardboard plant according to Claim 12 or 13, **characterized in that** the at least one guide table (78) has a guiding face (79) which for facilitating a compression of the corrugated cardboard web (1) laminated on two sides against the at least one guide table (78) is curved at least in regions, wherein a curvature radius of the curved guiding face (79) is preferably at least 2.5 metres, more preferably at least 5 metres.

15. Corrugated cardboard plant according to one of the preceding claims, **characterized in that** the at least one digital printing device (55) is displaceable, in particular in a guided manner, between a printing position and a parking position, wherein the parking position is preferably laterally beside the corrugated cardboard web (1) laminated on two sides.

16. Corrugated cardboard plant according to one of the preceding claims, **characterized by** a pre-coating assembly for pre-coating the web to be printed, wherein the pre-coating assembly is disposed upstream of the device (4) for producing a respective corrugated cardboard web (5) laminated on one side having the pre-coated web.

17. Corrugated cardboard plant according to one of the preceding claims, **characterized by** a peripheral trimming device (82) disposed upstream of the at least one printing device (55), for trimming the edges of the corrugated cardboard web (1) laminated on two sides.

18. Corrugated cardboard plant according to Claim 17, **characterized in that** the peripheral trimming device (82) conveys peripheral strips of the corrugated cardboard web (1) laminated on two sides that have been severed upstream to the at least one printing device (55).

19. Corrugated cardboard web according to Claim 5 and Claim 17 or 18, **characterized by** a print layout detection assembly (86) for activating the longitudinal cutting/grooving device (71), said print layout detection assembly (86) being disposed between the longitudinal cutting/grooving device (71) and the peripheral trimming device (82).

20. Corrugated cardboard plant according to one of the preceding claims, **characterized by** at least one gluing unit (35) for applying glue to the free tips of at least one corrugated cardboard web (5, 17) laminated on one side for connecting the latter in a glued manner to a further web (17, 5, 30) for forming a corrugated cardboard web (1) laminated on two sides, wherein the glue for bonding and drying on the at least one corrugated cardboard web (5, 17) laminated on one side permits processing temperatures of below 70°C, said temperatures favourably being present there on the at least one corrugated cardboard web (5, 17) laminated on one side and/or on the lamination web (30).

## Revendications

1. Installation de carton ondulé pour la fabrication de carton ondulé, comprenant
a) au moins un dispositif (4, 16) de fabrication, à partir d'une bande de couverture et d'une bande de matériau respectives, d'une bande de carton ondulé (5, 17) respective contrecollée d'un côté,
b) un dispositif de distribution de bande de contrecollage (27) destiné à distribuer une bande de contrecollage (30),
c) un dispositif (36) disposé en aval du dispositif de distribution de bande de contrecollage (27) et de l'au moins un dispositif (4, 16) de fabrication d'une bande de carton ondulé (5, 17) respective contrecollée d'un côté, comportant au moins une section de pression pour la fabrication, à partir de l'au moins une bande de carton ondulé (5, 17) contrecollée d'un côté et de la bande de contrecollage (30), d'une bande de carton ondulé (1) contrecollée de deux côtés,
d) une installation d'impression (49) disposée en aval du dispositif (36) de fabrication d'une bande de carton ondulé (1) contrecollée de deux côtés et comportant au moins un dispositif d'impression numérique (55) pour l'impression de la bande de carton ondulé (1) contrecollée de deux côtés, et
e) un dispositif de coupe transversale (73) disposé en aval de l'installation d'impression (49) pour la coupe transversale de la bande de carton ondulé (1) contrecollée de deux côtés pour former des feuilles de carton ondulé (2),
**caractérisée par**
f) une installation de traction disposée à côté de l'au moins un dispositif d'impression numérique (55) pour influencer la tension de bande de la bande de carton ondulé (1) contrecollée de deux côtés dans l'installation d'impression (49).

2. Installation de carton ondulé selon la revendication 1, **caractérisée en ce que** l'installation de traction comprend un premier dispositif de traction (37) disposé en amont de l'au moins un dispositif d'impression numérique (55).

3. Installation de carton ondulé selon la revendication 1 ou 2, **caractérisée en ce que** l'installation de traction comprend un second dispositif de traction (60) disposé en aval de l'au moins un dispositif d'impression numérique (55).

4. Installation de carton ondulé selon la revendication 2 et/ou 3, **caractérisée en ce que** le premier et/ou le second dispositif de traction (37, 60) comprend au moins un élément de traction (42, 65) pouvant être entraîné, et au moins un contre-élément (44, 67) associé à celui-ci, définissant au moins une fente de traction (40, 63) pour le passage à travers la bande de carton ondulé (1) contrecollée de deux côtés.

5. Installation de carton ondulé selon l'une des revendications précédentes, **caractérisée en ce que** l'installation d'impression (49) est disposée en amont d'un dispositif de coupe longitudinale/de rainure (71) destiné à la coupe longitudinale et/ou au rainurage de la bande de carton ondulé (1) contrecollée de deux côtés.

6. Installation de carton ondulé selon l'une des revendications précédentes, **caractérisée en ce qu'**un dispositif de coupe transversale courte (70) est disposé en amont de l'installation d'impression (49).

7. Installation de carton ondulé selon l'une des revendications 1 à 5, **caractérisée en ce qu'**un dispositif de coupe transversale courte (70) est disposé en aval de l'installation d'impression (49).

8. Installation de carton ondulé selon l'une des revendications précédentes, **caractérisée en ce que** l'installation d'impression (49) comprend une installation de synchronisation d'impression destinée à la synchronisation d'une impression, par l'au moins un dispositif d'impression numérique (55), avec la bande de carton ondulé (1) contrecollée de deux côtés, l'installation de synchronisation d'impression comprenant de préférence au moins une installation de lecture (81) permettant de lire les informations de synchronisation sur la bande de carton ondulé (1) contrecollée de deux côtés.

9. Installation de carton ondulé selon l'une des revendications précédentes, **caractérisée en ce que** l'installation d'impression (49) comporte un dispositif de mesure de vitesse de bande (54) destiné à mesurer la vitesse de transport de la bande de carton ondulé (1) contrecollée de deux côtés, le dispositif de mesure de vitesse de bande (54) étant disposé en amont de l'au moins un dispositif d'impression numérique (55), et en particulier disposé à côté de celui-ci, et étant en liaison de signal avec une unité d'actionnement pour la synchronisation d'une impression, par l'au moins un dispositif d'impression numérique (55), avec la bande de carton ondulé (1) contrecollée de deux côtés.

10. Installation de carton ondulé selon l'une des revendications précédentes, **caractérisée en ce que** l'installation d'impression (49) comprend un dispositif de guidage sous vide destiné à guider la bande de carton ondulé (1) contrecollée de deux côtés.

11. Installation de carton ondulé selon la revendication 10, **caractérisée en ce que** le dispositif de guidage sous vide comprend au moins un dispositif de chauffage destiné à chauffer la bande de carton ondulé (1) contrecollée de deux côtés.

12. Installation de carton ondulé selon la revendication 10 ou 11, **caractérisée en ce que** le dispositif de guidage sous vide comprend au moins une table de guidage (78) destinée à guider la bande de carton ondulé (1) contrecollée de deux côtés.

13. Installation de carton ondulé selon la revendication 12, **caractérisée en ce que** l'au moins une table de guidage (78) comprend, dans sa surface de guidage (79), au moins une ouverture d'aspiration destinée à aspirer la bande de carton ondulé (1) contrecollée de deux côtés sur l'au moins une table de guidage (78).

14. Installation de carton ondulé selon la revendication 12 ou 13, **caractérisée en ce que** l'au moins une table de guidage (78) comporte une surface de guidage (79) qui est incurvée au moins dans certaines zones pour faciliter la compression de la bande de carton ondulé (1) contrecollée de deux côtés sur l'au moins une table de guidage (78), un rayon de courbure de la surface de guidage (79) incurvée étant de préférence d'au moins 2,5 mètres, plus préférablement d'au moins 5 mètres.

15. Installation de carton ondulé selon l'une des revendications précédentes, **caractérisée en ce que** l'au moins un dispositif d'impression numérique (55) peut être déplacé, est en particulier guidé entre une position d'impression et une position de rangement, la position de rangement étant en particulier adjacente latéralement à la bande de carton ondulé (1) contrecollée de deux côtés.

16. Installation de carton ondulé selon l'une des revendications précédentes, **caractérisée par** une installation de pré-revêtement pour le pré-revêtement de la bande à imprimer, l'installation de pré-revêtement étant disposée en amont du dispositif (4) de fabrication d'une bande de carton ondulé (5) respective contrecollée d'un côté, à l'aide de la bande pré-revêtue.

17. Installation de carton ondulé selon l'une des revendications précédentes, **caractérisée par** un dispositif de découpe de bords (82) disposé en amont de l'au moins un dispositif d'impression (55) pour découper les bords de la bande de carton ondulé (1) contrecollée de deux côtés.

18. Installation de carton ondulé selon la revendication 17, **caractérisée en ce que** le dispositif de découpe de bords (82) transporte les bandes de bord séparées de la bande de carton ondulé (1) contrecollée de deux côtés en amont vers l'au moins un dispositif d'impression (55).

19. Installation de carton ondulé selon la revendication 5 et 17 ou 18, **caractérisée par** une installation de détection d'image d'impression (86) disposée entre le dispositif de coupe longitudinale/de rainure (71) et le dispositif de découpe de bords (82), laquelle installation de détection est destinée à actionner le dispositif de coupe longitudinale/de rainure (71).

20. Installation de carton ondulé selon l'une des revendications précédentes, **caractérisée par** au moins une unité d'encollage (35) destinée à appliquer de la colle sur les pointes libres d'au moins une bande de carton ondulé (5, 17) contrecollée d'un côté pour coller celle-ci sur une autre bande (17, 5, 30) afin de former une bande de carton ondulé (1) contrecollée de deux côtés, la colle destinée à la fixation et au séchage sur l'au moins une bande de carton ondulé (5, 17) contrecollée d'un côté permettant des températures de traitement inférieures à 70 °C, lesquelles sont avantageusement présentes au moins au niveau de l'au moins une bande de carton ondulé (5, 17) contrecollée d'un côté et/ou de la bande de contrecollage (30).
